# EUROPEAN PATENT SPECIFICATION

(11) **EP 2 436 861 B1**
(45) Date of publication and mention of the grant of the patent: **30.05.2018**
(21) Application number: 11183834.8
(22) Date of filing: 04.10.2011
(51) Int. Cl.: E05B 67/36, B60D 1/60

(54) **Locking mechanism, locking bolt, actuator and method of assembly**
Sperrmechanismus, Sperrbolzen, Schalter und Montierverfahren
Mécanisme de verrouillage, boulon de verrouillage, déclencheur et procédé d'assemblage

(30) Priority: 04.10.2010 GB 201016665
(43) Date of publication of application: 04.04.2012
(73) Proprietor: Maypole Limited, Woodgate Business Park Birmingham B32 3DE (GB)
(72) Inventor: Sworder, Malcolm Alan, Swindon SN25 2HW (GB); Jones, Christopher, Swindon SN2 2NY (GB)
(74) Representative: Gee, Steven William

(56) References cited:
- EP-A1- 0 566 453
- WO-A2-2005/014961
- FR-A1- 2 633 022

## Description

### FIELD OF THE INVENTION

This invention relates to a locking mechanism, to a locking bolt, to an actuator for use in the locking mechanism and locking bolt, and to a method of assembly.

### BACKGROUND TO THE INVENTION

The locking mechanism has been designed primarily for use as part of a locking bolt and the following description will therefore relate mainly to such applications. The use of the locking mechanism in other applications is not thereby excluded.

Locking bolts (which are sometimes referred to as locking pins) are used to secure certain articles, one article for which a locking bolt is suitable being a trailer hitch lock. In such an application, the hitch lock has an open bottom and is lowered around the hitch of the trailer in known fashion. The side walls of the hitch lock have a pair of aligned openings which can receive the locking bolt, the locking bolt passing underneath the hitch and bridging the gap between the aligned openings. When the locking bolt is fitted, the hitch lock and locking bolt together surround a part of the hitch, with the fitted locking bolt preventing the hitch lock from being lifted from the trailer hitch. The locking bolt is designed to be difficult and time-consuming to cut through, even with specialised tools, so that unless the locking bolt is unlocked and removed by use of the correct key, it is substantially immovable and so effectively secures the hitch lock to the trailer hitch.

### DESCRIPTION OF THE PRIOR ART

A locking bolt is described in UK patent 2 405 443. The locking bolt is in the form of an elongated bar having a central section and two enlarged ends. One of the enlarged ends is located upon a first part which is removable so as to allow the central section to be passed through two aligned openings (suitably aligned openings formed in the walls of a hitchlock or the like), the locking bar being designed to bridge the gap between the openings. The first part can be secured to the central section by way of a key-operated lock carried within a recess of the first part, the key-operated lock moving an actuator which drives locking members into an undercut annular groove of the central section. The enlarged ends of the locking bolt are designed to be too large to pass through the aligned openings, so that when assembled and locked the locking bolt can either secure the walls together, or can securely bridge the gap therebetween.

In commercial embodiments of prior art locking bolts made according to GB 2 405 443 the key-operated lock is designed to rotate the actuator, the actuator having a cammed section which engages the locking members and moves the locking members into and out of the undercut annular groove of the central section. The key-operated lock is a proprietary component which is supplied with an acircular projection at its end opposed to the key opening, and the actuator is manufactured with a channel which can accommodate the projection. When the locking bolt is assembled the projection is located within the channel whereby rotation of the key-operated lock causes corresponding rotation of the actuator. To restrict the actuator to the desired rotary movement, the cammed section is located between two support plates, the support plates being circular and a close fit within the recess in the first part of the locking bolt.

To increase the security of the locking bolt of GB 2 405 443 it is arranged that the key-operated lock is mounted into the first part by way of the second (distal) end of the first part, and the opening in the first (proximal) end of the first part through which the key is inserted is too small for the lock to pass therethrough. This avoids a problem with earlier locking bolts that the key-operated lock could be forcibly removed through its insertion opening.

Locking mechanisms, where the key-operated lock is mounted into the first part through its distal end, are also known from EP 0 566 453 or WO 2005 014 961. Nevertheless, persons intent on disabling the locking bolt are known to pass a drill through the keyhole and to drill into the lock. Even though the keyhole is too small for the lock to pass through it allows a sufficiently large drill to be used to destroy a large proportion of the internal components of the lock and to permit unauthorised unlocking and subsequent disassembly of the locking bolt.

The present invention seeks to avoid or reduce the likelihood that the lock can be damaged by a drill. The invention also seeks to provide an improved actuator and method of assembly, and also to reduce or avoid other disadvantages of the known locking mechanisms and locking bolts as set out below.

### SUMMARY OF THE INVENTION

According to the first aspect of the invention there is provided a locking mechanism comprising a first part and a second part, the first part and second part being securable together by way of at least one locking member carried by the first part, the locking member being driven into its locking position by an actuator which is in turn driven by a key-operated lock carried by the first part, the first part having a first end portion, the first part having a second end opposed to its first end portion, the first part having a recess in its second end which is adapted to accommodate the key-operated lock and the actuator, the actuator having a cam section whereby rotation of the actuator causes radial movement of the locking member, the actuator having a first support plate located between the key-operated lock and the cam section and a second support plate located to the opposed side of the cam section, the support plates being adapted for sliding engagement with the substantially circular internal surface of the recess whereby the actuator is restricted to substantially rotary movement, the first support plate having an acircular periphery whereby the first support plate can pass the locking member(s) during assembly of the first part.

In practical embodiments, the locking mechanism may be adapted to secure parts of a wheel clamp for example, such as the wheel clamp of our co-pending European patent application 11173072.7, in which the second part is the locking sleeve (26) of that document and the first part is the locking means (50).

In other embodiments the locking mechanism is part of a locking bolt. In a locking bolt the second part has a second end portion and there is a central section between the first and second end portions, the first and second end portions being of larger cross-sectional dimension than the central section.

Prior art actuators for locking mechanisms, and in particular locking bolts, have support plates which cannot pass the locking member(s) during assembly of the first part. Such actuators must therefore be assembled from separate elements within the recess, with the first support plate being inserted into the recess before the locking member(s) and the second support plate being inserted after the locking member(s). The cam section is typically inserted with the second support plate. On the other hand, the actuator of the present invention can be inserted after the locking member(s) and it can therefore be made as a one-piece construction, preferably a casting. The present actuator therefore avoids the joints and connections of the prior art actuators, which joints and connections provide the weakest points of the actuator and can permit the unauthorised disassembly of the locking bolt if sufficient loading is applied to the lock.

Desirably, the locking member(s) have a flattened base which lies against the cam section in use. The flattened base facilitates assembly of the first part, the acircular periphery of the first support plate preferably including a flat which can be aligned with the flattened base of the locking member(s) during assembly.

According to the second aspect of the invention there is provided a locking mechanism comprising a first part and a second part, the first part and second part being securable together by way of a key-operated lock carried by the first part, the first part having a first end portion, the first part having a second end opposed to its first end portion, the first part having an opening in its second end through which the key-operated lock is inserted and a keyhole in its first end portion, the keyhole being substantially oblong in shape with a major axis and a minor axis, the maximum dimension of the minor axis being less than 5mm.

It will be understood that the key must be rotated through around 90° within the keyhole in order to actuate the lock, and for this reason the keyholes in prior art locking mechanisms, particularly those used for locking bolts, have been made circular. With a typical key for a locking bolt having a maximum cross-sectional dimension (along its major axis) of 7mm or more, this requires the keyhole to be at least 7mm in diameter. A 7mm drill can therefore be inserted through the keyhole, which drill can cause sufficient damage to the lock to permit unauthorised disassembly of the locking bolt.

The inventors have, however, realised that the keyhole can be made acircular, and the key shaft can be shaped accordingly, so as to reduce the size of a drill (or other tool) which can be inserted through the keyhole.

Preferably, the maximum dimension of the minor axis of the keyhole is less than 4mm, ideally approximately 3mm.

Desirably, the key has a coded section adapted to engage the lock mechanism in use, a handle part for manual gripping during use, and a shaft between the coded section and handle part, the shaft having a smaller cross-sectional dimension than the coded section.

Ideally, the key-operated lock is a "disc-detainer" type, with the lock mechanism comprising a number of discs all of which have a peripheral slot. The discs are rotated by the key, with the coded section of the key rotating the respective discs through a predetermined angle. The coded section, in cooperation with the form of each disc, results in the peripheral slots all being aligned in the unlocked condition, and when aligned a locking bar of the lock mechanism enters the respective slots and permits the lock mechanism to be rotated within its housing. Disc detainer locks are known to be very secure and are therefore suitable for the particular applications in which a locking mechanism will be used.

Notwithstanding that the keyhole according to the second aspect of the invention is substantially oblong in shape, the other aspects of the invention can utilise keyholes of other shapes, such as a cross or a star shape. It will be understood that most of the benefits of an oblong keyhole can be shared by these other shapes, in that they also provide a smaller opening thus making a drill attack more difficult and yet still permit the rotation of a key with a shaft having an appropriate cross-sectional dimension.

Preferably, the key-operated lock and the actuator are secured in the first part by a snap ring having a substantially circular cross-section.

In prior art locking mechanisms of this type, the key-operated lock and actuator are secured within the first part by a circlip. A circlip has an oblong cross-section and is located in an oblong-shaped groove in the first part. It is recognised that a significant force is necessary to remove the key-operated lock and actuator from the first part of the locking mechanism, but such forces are often available to persons intent on disabling the lock, and the required force can often be imparted to the lock (by way of the keyhole) so as to push the circlip out of its retaining groove and disable the locking mechanism. With the present invention only a smaller forcing tool can be passed through the keyhole, and a substantially circular cross-section snap ring will result in forces which seek to push the lock out of the first part acting to press the snap ring further into its retaining groove. A lock which is secured by a snap ring therefore requires significantly more force to remove it forcibly from the first part, and in particular requires considerably more force than can typically be applied to the lock of a locking mechanism.

### BRIEF DESCRIPTION OF THE PREFERRED EMBODIMENTS

The invention will now be described in more detail, by way of example, with reference to the accompanying drawings, in which:
- Fig.1: shows a side sectional view of the first part of a locking mechanism according to the invention, and part of the second part;
- Fig.2: shows an end view of the first part;
- Fig.3: shows a side view of the actuator;
- Fig.4: shows an end view of the actuator;
- Fig.5: shows a sectional view of the locking members and a preferred design of actuator;
- Fig.6: shows a side view of the key of the key-operated lock;
- Fig.7: shows an end view of the key; and
- Fig.8: shows a cross-section through one of the support plates of the actuator during assembly of the first part.

### DETAILED DESCRIPTION

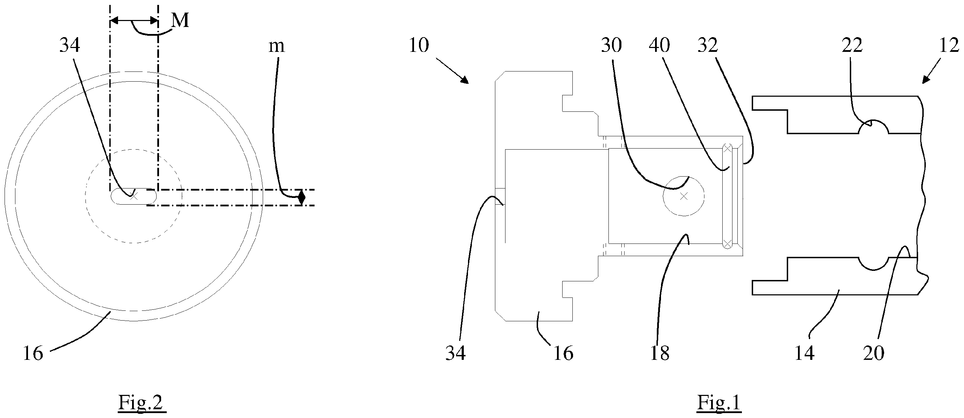

The locking mechanism of the present invention comprises a first part 10 and a second part 12, and acts to secure the first part 10 to the second part 12 as explained below. Only part of the second part 12 is shown in Fig.1 as the form of the remainder of the second part is not relevant to the structure and method of assembly of the lock mechanism.

In one practical embodiment the lock mechanism is part of a locking bolt, in which case (in common with prior art locking bolts of this type, and in common with the locking bolt of GB 2 405 443), the second part 12 comprises an elongate central section 14 and an enlarged end (not shown) which has a cross-sectional dimension greater than the central section, and preferably (but not necessarily) of identical size and shape to the enlarged first end portion 16 of the first part 10. Accordingly, whilst in other embodiments of locking bolt the first part can include the central section, in the preferred embodiment shown the first part is separable from the central section.

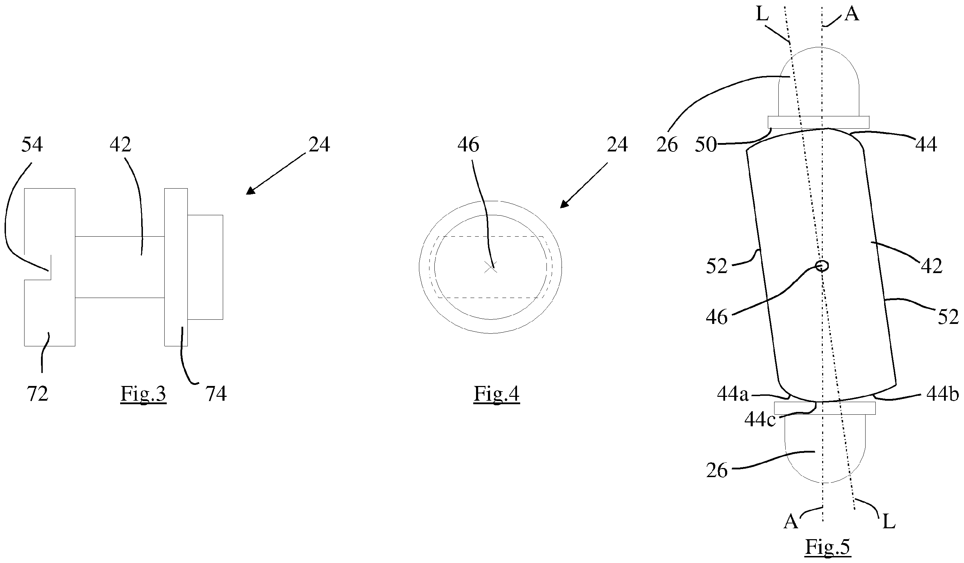

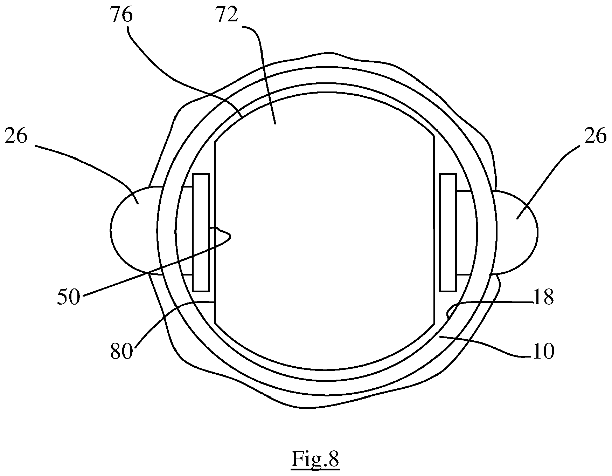

Also in common with locking mechanisms for locking bolts such as that of GB 2 405 443, the second part 12 has a recess 20 with an undercut annular groove 22. The first part 10 has a recess 18 which accommodates a key-operated lock (not shown), an actuator 24 (see Figs. 3-5), and two locking members 26 (See Figs. 5 and 8). The locking members 26 can project from holes 30 formed through the wall surrounding the recess 18 in the first part 10 (only one of which holes can be seen in Fig.1) and into the undercut annular groove 22, whereby to secure the first part 10 to the second part 12.

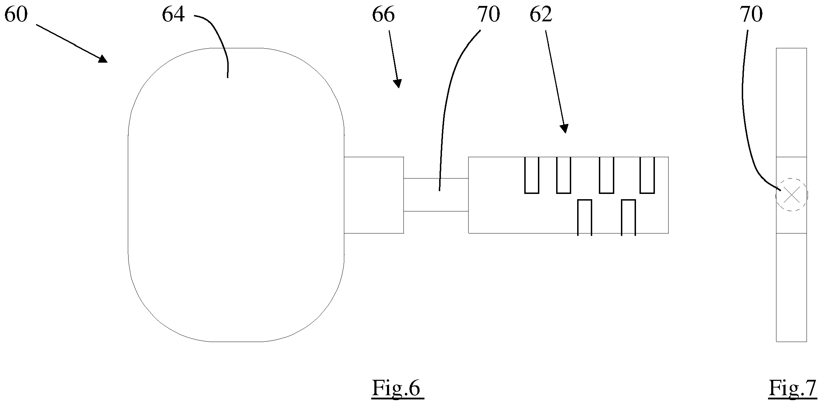

The key-operated lock and actuator 24 are located in the first part by way of its open second end 32. Thus, the key-operated lock is not inserted into the first part through an opening in the first end portion 16, and the keyhole 34 in the first end portion 16 can therefore be made smaller than the key-operated lock, and in particular only just large enough to accommodate the key 60 (Figs. 6,7). This prevents the key-operated lock being forcibly removed through the keyhole 34.

As seen in Fig.2, the keyhole 34 is substantially oblong in shape, with rounded ends. Specifically, the keyhole has a major axis of dimension M and a minor axis of dimension m, the major axis being larger than the minor axis. It will be understood that the maximum diameter drill which can be passed through the keyhole 34 corresponds to the minor axis m, and reducing the dimension of the minor axis reduces the diameter of drill which can be used, and therefore also reduces the damage which can be inflicted upon the components within the lock. In the present invention, the dimension of the minor axis m can be as small as approximately 3mm, and it is known that a 3mm drill will be unlikely to disable a disc detainer lock for example.

In tests conducted prior to filing the present application, attempts were made to enlarge the keyhole 34 by using a drill bit having a larger diameter than the minor axis m. Those tests were undertaken with a hand drill fitted with a conventional fluted twist drill, as typically used for the unauthorised drilling out of locks of prior art locking mechanisms. It was found that the drill bit wanders uncontrollably along the keyhole 34 and breaks before significant material of the first part 10 is removed. In practice, a person intent on disassembling a locking mechanism (perhaps to steal a caravan which is secured thereby) will not likely carry replacement drill bits, and will therefore be unlikely to continue to attack the locking mechanism once the drill bit has broken or become damaged.

The key-operated lock and actuator 24 are retained in the first part 10 by a snap ring (not shown) which locates in a retaining groove 40. The cross-section of the snap ring is substantially circular, and the retaining groove 40 is substantially semi-circular with a substantially identical radius to the snap ring. The snap ring is therefore a close fit in the retaining groove 40.

The circular cross-sectional shape of the snap ring means that attempts to forcibly remove the key-operated lock and actuator 24 from the first part 10 (perhaps by way of a forcing tool inserted through the keyhole 34) will result in the snap ring being pressed more forcibly into the retaining groove 40, i.e. there is little or no tendency for the snap ring to lift out of the retaining groove 40 as in the case of a conventional circlip of oblong cross-section.

The actuator 24, and in particular its cammed section 42, is shown in more detail in Figs. 3-5. The cammed section 42 of the actuator 24 is substantially oblong in shape, with (two) rounded ends 44. In accordance with preferred embodiments of the invention the rounded ends 44 have a first more-sharply curved section 44a which facilitates the transfer of rotational movement of the cammed section 42 into linear movement of the locking members 26. The rounded ends 44 have a second section 44b which is less sharply curved (substantially flat). The curved sections 44a and 44b meet at a relatively smooth junction 44c.

Whilst the locking members 26 have a curved top to match the curved form of the undercut annular groove 22, they have a flat bottom 50 in engagement with the cammed section 42 of the actuator 24). The advantage of these structural features is described below in relation to Fig.8.

It will be understood that in the unlocked condition the flat bottom 50 of each of the locking members 26 engages the respective flat sides 52 of the cammed section 42. The key-operated lock is designed to rotate through approximately 90° between its unlocking and locking conditions. In known fashion, the key-operated lock has a projecting blade which locates within the channel 54 of the actuator, so that the actuator is driven to rotate through approximately 90° also.

Accordingly, in its locked condition the longitudinal axis L-L of the cammed section 42 of the actuator 24 should be aligned with the axis A-A of the locking members 26. In practice, however, with manufacturing tolerances and age-related wear of the lock componentry, the lock will often rotate the cammed section 42 through less than 90°, a situation which is demonstrated in Fig.5.

It is known for attempts to be made to forcibly separate the first part 10 of the locking mechanism from the second part 12. Considerable leverage may be applied to separate these components, and forces which seek to separate the first part 10 from the second part 12 will act to drive the locking members 26 out of the undercut annular groove 22, and thereby seek to drive the locking members 26 towards one another from the (locked) position shown in Fig.5.

In preferred arrangements of the present invention, such forces increase the loading of the locking members 26 upon the cammed section 42, but cause little or no rotational force upon the actuator 24, and therefore do not impart any (significant) force upon the lock. Thus, it is arranged that the junctions 44c do not lie upon the longitudinal axis L-L of the cammed section 42, so that less than 90° rotation is required for the point of engagement between the rounded end 44 and the locking member 26 to pass the junctions 44c. Once the cammed section 42 has rotated sufficiently that the locking members 26 engage the (substantially flat) surfaces 44b the tendency for forces upon the locking members to cause anticlockwise (unlocking) movement of the cammed section 42 (as shown in Fig.5) is significantly reduced or even eliminated (depending upon the exact form of the surfaces 44b). Thus, rotating the cammed section 42 beyond the junctions 44c creates an "over centre" effect, reducing the tendency for the cammed section 42 to be forcibly rotated towards the unlocked position.

The key 60 is shown in Figs. 6 and 7 and comprises a coded section 62, a handle part 64, and a shaft 66 between the coded section 62 and the handle part 64. In accordance with a preferred aspect of the present invention, the shaft 66 has a portion 70 with a reduced cross-sectional dimension, and in particular a substantially circular cross-section as shown in Fig.7. The reduced portion 70 lies within the keyhole 34 when the key 60 is fully engaged with the lock mechanism, and the diameter of the reduced portion 70 is only slightly smaller than the dimension of the minor axis m. The reduced section 70 thereby permits the keyhole 34 to be acircular without preventing rotation of the key.

As shown in Fig.3, the cammed section 42 of the actuator 24 is located between two support plates 72 and 74. The support plate 74 is substantially circular, and is a close sliding fit within the recess 18, whereby to prevent unwanted lateral movement of the actuator in use, and in particular to restrict the cammed section 42 to the desired rotary movement. As better seen in Fig.8, however, the support plate 72 is acircular, and whilst it has parts 76 which are a close sliding fit within the recess 18 the parts 76 are joined by two flats 80. It will be understood from Fig.8 that the two flats 80, and the flat bottoms 50 of the locking members 26, permit the support plate 72 to pass the locking members during assembly of the first part 10.

It will also be understood that the flat bottoms 50 of the locking members 26 are larger than the holes 30 so that the locking members 26 are retained in the first part 10. Biasing springs can be provided if desired so as to bias the locking members 26 towards (and into sliding engagement with) the cammed section 42.

Gaps are shown between the respective parts in Fig.8 for clarity, and in particular between the respective parts 76 and the inside surface of the recess 18, but it will be understood that in practice the parts 76 are a close sliding fit within the recess 18 so as to assist the support plate 74 in preventing unwanted lateral movement of the actuator in use, and in restricting the cammed section 42 to the desired rotary movement.

It will be understood that in an alternative embodiment the parts 76 could be extended towards the locking members 26, and the flats 80 could be replaced by recesses which accommodate the flat bottoms 50 of the locking members.

The first part 10 can therefore be assembled in the following manner: {i} insert the key-operated lock from the open second end 32; {ii} insert the locking members 26 into the recess 18 and into their respective holes 30; {iii} insert the actuator 24 into the recess 18, with the flats 80 passing the flat bottoms 50 of the locking members; {iv} insert the snap ring into the retaining groove 40.

It will be understood that each of the separate improvements to the known locking mechanisms which have been described can be used independently of the others, and each will provide greater security against damage or disablement of the locking mechanism. The greatest advantage is obtained by a locking mechanism which utilises all of the improvements as in the described embodiments.

## Claims

1. A locking mechanism comprising a first part (10) and a second part (12), the first part and second part being securable together by way of at least one locking member (26) carried by the first part, the locking member(s) being driven into its locking position by an actuator (24) which is in turn driven by a key-operated lock carried by the first part, the first part having a first end portion (16), the first part having a second end (32) opposed to its first end portion (16), the first part having a recess (18) in its second end (32) which is adapted to accommodate the key-operated lock and the actuator (24), the actuator having a cammed section (42) whereby rotation of the actuator causes radial movement of the locking member(s) (26), the actuator having a first support plate (72) located between the cammed section (42) and the key-operated lock and a second support plate (74) located to the opposed side of the cammed section (42), the support plates (72, 74) being adapted for sliding engagement with the substantially circular internal surface of the recess (18), **characterised in that** the first support plate (72) has an acircular periphery (76, 80) whereby the first support plate can pass the locking member(s) (26) during assembly of the first part.

2. The locking mechanism according to claim 1 in which the first support plate (72), the cammed section (42) and the second support plate (74) are integrally formed.

3. The locking mechanism according to claim 1 or claim 2 in which the cammed section (42) is of generally oblong form with two rounded ends (44), the rounded ends (44) being connected by substantially flat surfaces (52).

4. The locking mechanism according to claim 3 in which each of the rounded ends (44) has a first more-sharply curved section (44a) and a second less-sharply-curved section (44b), the curved sections (44a and 44b) meeting at a relatively smooth junction 44c.

5. The locking mechanism according to any one of claims 1-4 in which the locking member(s) (26) has a flattened base (50) which engages the cammed section (42) in use.

6. The locking mechanism according to any one of claims 1-5 in which the acircular periphery of the first support plate (72) includes a portion (80) adapted to pass the locking member (26) during assembly.

7. The locking mechanism according to any one of claims 1-6 in which the first part has a keyhole (34) in its first end portion (16), the keyhole (34) being substantially oblong in shape with a major axis and a minor axis, the maximum dimension of the minor axis being less than 4mm.

8. The locking mechanism according to claim 7 in which the minor axis is approximately 3mm.

9. The locking mechanism according to claim 7 or claim 8 in which the ends of the keyhole (34) are rounded.

10. The locking mechanism according to any one of claims 7-9 including a key (60) for the key-operated lock, the key (60) having a coded section (62) adapted to engage the lock in use, a handle part (64) for manual gripping during use, and a shaft (66) between the coded section and handle part, the shaft (66) having a smaller cross-sectional dimension than the coded section (62).

11. The locking mechanism according to any one of claims 1-10 in which the key-operated lock and the actuator (24) are secured in the first part (10) by a snap ring having a substantially circular cross-section.

12. An actuator for the locking mechanism of any one of claims 1-11, the actuator having:
a first support plate (72);
a second support plate (74);
a cammed section (24) located between the first and second support plates;
**characterised in that** the first support plate (72) has an acircular periphery (76, 80), and **in that** the first support plate (72), the cammed section (42) and the second support plate (74) are integrally formed.

13. A locking bolt having a locking mechanism according to any one of claims 1-11, the second part (12) having a second end portion, the locking bolt having a central section between the first and second end portions, the first and second end portions being of larger cross-sectional dimension than the central section.

14. A method of assembling a first part (10) of a locking mechanism, the method including the steps of:
{i} providing a first part (10) having a first end portion (16) and a second end (32) opposed to the first end portion, the first end portion having a larger cross-sectional dimension than the second end, the first part having a recess (18) in the second end and a keyhole (34) in its first end portion, the first part having at least one hole (30) through the wall surrounding the recess (18);
{ii} inserting a key-operated lock into the first part (10) from the second end (32);
{iii} inserting a locking member (26) into the recess (18) and into the hole (30);
{iv} providing an actuator (24) having a first support plate (72), a second support plate (74) and a cammed section (42) between the support plates, the first support plate being acircular;
{v} inserting the actuator (24) into the recess (18) so that the first support plate (72) passes the locking member (26) and the cam section (42) lies adjacent to the locking member;
{vi} fitting a retaining means whereby to retain the actuator (24) and key-operated lock within the recess (18).

15. The method according to claim 14 in which the first support plate (72), the cammed section (42) and the second support plate (74) are integrally formed.

## Patentansprüche

1. Verriegelungsmechanismus, bestehend aus einem ersten Teil (10) und einem zweiten Teil (12), wobei das erste Teil und das zweite Teil gemeinsam mithilfe von mindestens einem Verriegelungselement (26) gesichert werden können, die von dem ersten Teil getragen werden, das Verriegelungselement bzw. die Verriegelungselemente durch ein Stellglied (24) in ihre Verriegelungsposition getrieben werden, das seinerseits durch ein per Schlüssel zu betätigendes Schloss angetrieben wird, das von dem ersten Teil getragen wird, das erste Teil einen ersten Endabschnitt (16) aufweist, das erste Teil einen zweiten Endabschnitt (32) gegenüber seinem ersten Endabschnitt (32) aufweist, das erste Teil eine Aussparung (18) in seinem zweiten Ende (32) aufweist, die dazu ausgelegt ist, das per Schlüssel zu betätigende Schloss und das Stellglied (24) aufzunehmen, das Stellglied einen Nockenabschnitt (42) aufweist, wodurch die Drehung des Stellglieds eine radiale Bewegung des Verriegelungselements bzw. der Verriegelungselemente (26) bewirkt, das Stellglied eine erste Halteplatte (72) aufweist, das sich zwischen dem Nockenabschnitt (42) und dem per Schlüssel zu betätigenden Schloss befindet, und eine zweite Halteplatte (74) aufweist, die sich auf der gegenüberliegenden Seite des Nockenabschnitts (42) befindet, die Halteplatten (72, 74) ausgelegt sind für einen gleitende Eingriff mit der im Wesentlichen kreisförmigen Innenfläche der Aussparung (18), **dadurch gekennzeichnet, dass** die erste Halteplatte (72) eine nicht-kreisförmige Peripherie (76, 80) aufweist, wodurch die erste Halteplatte während der Montage des ersten Teils das Verriegelungselement bzw. die Verriegelungselemente (26) passieren kann.

2. Verriegelungsmechanismus nach Anspruch 1, bei dem die erste Halteplatte (72), der Nockenabschnitt (42) und die zweite Halteplatte (74) in einem einzigen Stück ausgebildet sind.

3. Verriegelungsmechanismus nach Anspruch 1 oder Anspruch 2, wobei der Nockenabschnitt (42) eine im Allgemeinen längliche Form mit zwei abgerundeten Enden (44) hat und die abgerundeten Enden (44) durch im Wesentlichen ebene Flächen (52) verbunden sind.

4. Verriegelungsmechanismus nach Anspruch 3, bei dem jedes der abgerundeten Enden (44) einen ersten, stärker gekrümmten Abschnitt (44a) und einen zweiten, weniger stark gekrümmten Abschnitt (44b) aufweist und sich die gekrümmten Abschnitte (44a und 44b) an einem relativ gleichmäßigen Übergang 44c treffen.

5. Verriegelungsmechanismus nach einem der Ansprüche 1-4, bei dem das Verriegelungselement bzw. die Verriegelungselemente (26) eine abgeflachte Basis (50) aufweist bzw. aufweisen, die im Gebrauch in den Nockenabschnitt (42) eingreift.

6. Verriegelungsmechanismus nach einem der Ansprüche 1-5, bei dem die nicht-kreisförmige Peripherie der ersten Halteplatte (72) einen Abschnitt (80) enthält, der angepasst ist, um das Verriegelungselement (26) während der Montage zu passieren.

7. Verriegelungsmechanismus nach einem der Ansprüche 1-6, bei dem das erste Teil in seinem ersten Endabschnitt (16) ein Schlüsselloch (34) aufweist, das Schlüsselloch (34) eine im Wesentlichen längliche Form mit einer großen Achse und einer kleinen Achse aufweist, wobei die maximale Abmessung der kleinen Achse weniger als 4 mm beträgt.

8. Verriegelungsmechanismus nach Anspruch 7, bei dem die kleine Achse ungefähr 3 mm lang ist.

9. Verriegelungsmechanismus nach Anspruch 7 oder Anspruch 8, bei dem die Enden des Schlüssellochs (34) abgerundet sind.

10. Verriegelungsmechanismus nach einem der Ansprüche 7-9, umfassend einen Schlüssel (60) für das per Schlüssel zu betätigende Schloss, wobei der Schlüssel (60) einen codierten Abschnitt (62) aufweist, der dazu ausgelegt ist, im Gebrauch in das Schloss einzugreifen, ein Griffteil (64) zum manuellen Ergreifen während des Gebrauchs und einen Schaft (66) zwischen dem codierten Abschnitt und dem Griffteil, wobei der Schaft (66) eine kleinere Querschnittabmessung aufweist als der codierte Abschnitt (62).

11. Verriegelungsmechanismus nach einem der Ansprüche 1-10, bei dem das per Schlüssel zu betätigende Schloss und das Stellglied (24) in dem ersten Teil (10) durch einen Sicherungsring gesichert sind, der einen im Wesentlichen kreisförmigen Querschnitt aufweist.

12. Stellglied für den Verriegelungsmechanismus nach einem der Ansprüche 1-11, das Stellglied aufweisend:
eine erste Halteplatte (72);
eine zweite Halteplatte (74);
einen Nockenabschnitt (24), der sich zwischen der ersten und der zweiten Halteplatte befindet;
**dadurch gekennzeichnet, dass** die erste Halteplatte (72) eine nicht-kreisförmige Peripherie (76, 80) aufweist und dass die erste Halteplatte (72), der Nockenabschnitt (42) und die zweite Halteplatte (74) in einem einzigen Stück ausgebildet sind.

13. Verriegelungsbolzen, aufweisend einen Verriegelungsmechanismus nach einem der Ansprüche 1-11, wobei das zweite Teil (12) einen zweiten Endabschnitt aufweist, der Verriegelungsbolzen einen zentralen Abschnitt zwischen dem ersten und dem zweiten Endabschnitt aufweist, wobei der erste und der zweite Endabschnitt eine größere Querschnittabmessung aufweisen als der zentrale Abschnitt.

14. Verfahrens zur Montage eines ersten Teils (10) eines Verriegelungsmechanismus, das Verfahren umfassend die folgenden Schritte:
{i} das Bereitstellen eines ersten Teils (10), das einen ersten Endabschnitt (16) und ein zweites Ende (32) gegenüber dem ersten Endabschnitt aufweist, wobei der erste Endabschnitt eine größere Querschnittabmessung aufweist als das zweite Ende, das erste Teil eine Aussparung (18) in dem zweiten Ende aufweist und ein Schlüsselloch (34) in seinem ersten Endabschnitt aufweist, wobei das erste Teil mindestens ein Loch (30) durch die Wand aufweist, welche die Aussparung (18) umgibt;
{ii} das Einführen eines per Schlüssel zu betätigenden Schlosses in das erste Teil (10) von dem zweiten Ende (32);
{iii} das Einführen eines Verriegelungselements (26) in die Aussparung (18) und in das Loch (30);
{iv} das Bereitstellen eines Stellglieds (24), das eine erste Halteplatte (72), eine zweite Halteplatte (74) und einen Nockenabschnitt (42) zwischen den Halteplatten aufweist, wobei die erste Halteplatte nicht-kreisförmig ist;
{v} das Einführen des Stellglieds (24) in die Aussparung (18), so dass die erste Halteplatte (72) das Verriegelungselement (26) passiert und der Nockenabschnitt (42) angrenzend an das Verriegelungselement liegt;
{vi} das Einpassen einer Haltevorrichtung, durch welche das Stellglied (24) und das per Schlüssel zu betätigende Schloss in der Aussparung (18) gehalten wird.

15. Verfahren nach Anspruch 14, bei dem die erste Halteplatte (72), der Nockenabschnitt (42) und die zweite Halteplatte (74) in einem einzigen Stück ausgebildet sind.

## Revendications

1. Un mécanisme de verrouillage comprenant une première partie (10) et une deuxième partie (12), la première partie et la deuxième partie pouvant être assujetties ensemble au moyen d'au moins un élément de verrouillage (26) porté par la première partie, l'élément ou les éléments de verrouillage étant entraînés dans sa/leur position de verrouillage par un actionneur (24) qui est à son tour entraîné par un verrou actionné par clé porté par la première partie, la première partie ayant une portion de première extrémité (16), la première partie ayant une deuxième extrémité (32) opposée à sa portion de première extrémité (16), la première partie ayant un évidement (18) dans sa deuxième extrémité (32) qui est conçu pour recevoir le verrou actionné par clé et l'actionneur (24), l'actionneur ayant une section à came (42) grâce à quoi une rotation de l'actionneur provoque un déplacement radial de l'élément ou des élément de verrouillage (26), l'actionneur ayant une première plaque de support (72) située entre la section à came (42) et le verrou actionné par clé et une deuxième plaque de support (74) située sur le côté opposé de la section à came (42), les plaques de support (72, 74) étant conçues pour se mettre en prise coulissante avec la surface interne substantiellement circulaire de l'évidement (18), **caractérisé en ce que** la première plaque de support (72) a une périphérie acirculaire (76, 80) grâce à quoi la première plaque de support peut passer l'élément ou les éléments de verrouillage (26) durant l'assemblage de la première partie.

2. Le mécanisme de verrouillage selon la revendication 1 dans lequel la première plaque de support (72), la section à came (42) et la deuxième plaque de support (74) sont formées de façon solidaire.

3. Le mécanisme de verrouillage selon la revendication 1 ou la revendication 2 dans lequel la section à came (42) est de forme généralement oblongue avec deux extrémités arrondies (44), les extrémités arrondies (44) étant reliées par des surfaces substantiellement plates (52).

4. Le mécanisme de verrouillage selon la revendication 3 dans lequel chacune des extrémités arrondies (44) a une première section plus nettement incurvée (44a) et une deuxième section moins nettement incurvée (44b), les sections incurvées (44a et 44b) se rencontrant au niveau d'une jonction relativement lisse 44c.

5. Le mécanisme de verrouillage selon l'une quelconque des revendications 1 à 4 dans lequel l'élément ou les éléments de verrouillage (26) a/ont une base aplatie (50) qui se met en prise avec la section à came (42) lors de l'utilisation.

6. Le mécanisme de verrouillage selon l'une quelconque des revendications 1 à 5 dans lequel la périphérie acirculaire de la première plaque de support (72) inclut une portion (80) conçue pour passer l'élément de verrouillage (26) durant l'assemblage.

7. Le mécanisme de verrouillage selon l'une quelconque des revendications 1 à 6 dans lequel la première partie a un trou de serrure (34) dans sa portion de première extrémité (16), le trou de serrure (34) étant substantiellement de forme oblongue avec un axe majeur et un axe mineur, la dimension maximale de l'axe mineur étant inférieure à 4 mm.

8. Le mécanisme de verrouillage selon la revendication 7 dans lequel l'axe mineur fait approximativement 3 mm.

9. Le mécanisme de verrouillage selon la revendication 7 ou la revendication 8 dans lequel les extrémités du trou de serrure (34) sont arrondies.

10. Le mécanisme de verrouillage selon l'une quelconque des revendications 7 à 9 incluant une clé (60) pour le verrou actionné par clé, la clé (60) ayant une section codée (62) conçue pour se mettre en prise avec le verrou lors de l'utilisation, une partie formant poignée (64) pour une préhension manuelle durant l'utilisation, et un arbre (66) entre la section codée et la partie formant poignée, l'arbre (66) ayant une dimension en coupe transversale plus petite que la section codée (62).

11. Le mécanisme de verrouillage selon l'une quelconque des revendications 1 à 10 dans lequel le verrou actionné par clé et l'actionneur (24) sont assujettis dans la première partie (10) par une bague d'encliquetage ayant une section transversale substantiellement circulaire.

12. Un actionneur pour le mécanisme de verrouillage de l'une quelconque des revendications 1 à 11, l'actionneur ayant :
une première plaque de support (72) ;
une deuxième plaque de support (74) ;
une section à came (24) située entre les première et deuxième plaques de support ;
**caractérisé en ce que** la première plaque de support (72) a une périphérie acirculaire (76, 80), et **en ce que** la première plaque de support (72), la section à came (42) et la deuxième plaque de support (74) sont formées de façon solidaire.

13. Un boulon de verrouillage ayant un mécanisme de verrouillage selon l'une quelconque des revendications 1 à 11, la deuxième partie (12) ayant une portion de deuxième extrémité, le boulon de verrouillage ayant une section centrale entre les portions de première et de deuxième extrémités, les portions de première et de deuxième extrémités étant de plus grande dimension en coupe transversale que la section centrale.

14. Un procédé d'assemblage d'une première partie (10) d'un mécanisme de verrouillage, le procédé incluant les étapes consistant à :
{i} fournir une première partie (10) ayant une portion de première extrémité (16) et une deuxième extrémité (32) opposée à la portion de première extrémité, la portion de première extrémité ayant une dimension en coupe transversale plus grande que la deuxième extrémité, la première partie ayant un évidement (18) dans la deuxième extrémité et un trou de serrure (34) dans sa portion de première extrémité, la première partie ayant au moins un trou (30) à travers la paroi entourant l'évidement (18) ;
{ii} insérer un verrou actionné par clé dans la première partie (10) à partir de la deuxième extrémité (32) ;
{iii} insérer un élément de verrouillage (26) dans l'évidement (18) et dans le trou (30) ;
{iv} fournir un actionneur (24) ayant une première plaque de support (72), une deuxième plaque de support (74) et une section à came (42) entre les plaques de support, la première plaque de support étant acirculaire ;
{v} insérer l'actionneur (24) dans l'évidement (18) de sorte que la première plaque de support (72) passe l'élément de verrouillage (26) et la section de came (42) se trouve adjacente à l'élément de verrouillage ;
{vi} installer un moyen de maintien grâce auquel maintenir l'actionneur (24) et le verrou actionné par clé à l'intérieur de l'évidement (18).

15. Le procédé selon la revendication 14 dans lequel la première plaque de support (72), la section à came (42) et la deuxième plaque de support (74) sont formées de façon solidaire.
